# FASCICULE DE BREVET EUROPEEN

(11) **EP 0 713 649 B1**
(45) Date de publication et mention de la délivrance du brevet: **02.01.2002**
(21) Numéro de dépôt: 95402249.7
(22) Date de dépôt: 09.10.1995
(51) Int. Cl.: A23P 1/08, A23C 19/09

(54) **Aliment composite et son procédé de fabrication**
Kompositnahrungsmittel und Verfahren zu dessen Herstellung
Composite foodstuff and process for preparing

(30) Priorité: 26.10.1994 FR 9412808
(43) Date de publication de la demande: 29.05.1996
(73) Titulaire: BONGRAIN, 78280 Guyancourt (FR)
(72) Inventeur: Surmely, Alain-Marie, I-173 Gragnano Trebbiese (IT)
(74) Mandataire: Hurwic, Aleksander

(56) Documents cités:
- EP-A- 0 260 194
- EP-A- 0 358 983
- WO-A-93/20705
- DE-A- 3 625 578
- DE-A- 3 625 579
- FR-A- 2 386 235
- FR-A- 2 516 356
- GB-A- 1 462 581
- DATABASE FSTA INTERNATIONAL FOOD INFORMATION SERVICE (IFIS), FRANFURT/MAIN, DE 87-02-p0161, TRIPI V.: "Burrata from Puglia" XP002036304 & MONDO DEL LATTE, vol. 40, no. 1, pages 17-19,

## Description

La présente invention se rapporte à des procédés de fabrication d'un aliment composite, notamment à base de fromage ou de composition fromagère.

Il est connu, notamment en pâtisserie, de réaliser des aliments composites comportant une enveloppe comestible remplie d'un fourrage. Ces aliments sont habituellement obtenus en formant une enveloppe autour d'un noyau formant le fourrage, la cuisson de l'aliment conférant de la rigidité à l'enveloppe, ou en injectant une crème dans une enveloppe rigide creuse. La variété des aliments composites est limitée par les produits disponibles susceptibles de former l'enveloppe et le fourrage. De plus, on n'obtient pas une cohésion intime entre l'enveloppe et le fourrage, ce qui peut dégrader les qualités organoleptiques de l'aliment composite.

De plus, les aliments composites de type connu sont relativement fragiles, ce qui augmente le coût de leur manutention, transport et stockage.

On connaît, par ailleurs, des fromages italiens comme le burrata, qui comprennent une enveloppe constituée par un fromage à pâte fillée, notamment de mozzarella, remplie d'un fourrage à base de crème, de beurre ou de fromage (TRIPI, 1986, *J Journal,* 40, 17-19). Ces fromages sont fabriqués par des méthodes manuelles qui consistent généralement à travailler une pâte de mozzarella de manière à former une vésicule dans laquelle on introduit le fourrage et que l'on ferme ensuite par pression, en réchauffant les bords de la vésicule dans de l'eau chaude.

On connaît, encore, par la Demande Internationale PCT n° 93/20705, un procédé industriel de confection de confiseries dans lequel on injecte de l'air ou un fourrage dans une sphère creuse en chewing-gum ou en caramel.

La présente invention a pour but d'offrir un procédé permettant de fabriquer industriellement un aliment composite qui comprend une enveloppe et un fourrage, et qui présente une cohésion intime entre l'enveloppe et le fourrage.

La présente invention a également pour but d'offrir un procédé qui permette de fabriquer industriellement un tel aliment ayant un bel aspect, des qualités organoleptiques améliorées, et qui soit susceptible d'être conditionné en quantité désirée, notamment en portion individuelle ou en portion familiale.

Ces buts sont atteints selon l'invention par un procédé de fabrication d'un aliment composite, comportant les étapes consistant à :
a) réaliser une pièce compacte en un premier aliment, élastique ou malléable, constitué par un fromage à pâte filée,
b) réaliser un second aliment fluide, pâteux ou visqueux,
c) injecter le second aliment au coeur de la pièce du premier aliment de manière à le gonfler en choisissant la forme de la pièce du premier aliment, la pression et le débit d'injection du deuxième aliment et les quantités relatives du premier et du second aliment, de manière à ce que le premier aliment forme une enveloppe enrobant le second aliment formant un fourrage. De préférence, on obtient une liaison intime entre l'enveloppe et le fourrage.

L'invention a également pour objet un procédé, caractérisé en ce que le fromage à pâte filée est de la mozzarella.

L'invention a également pour objet un procédé, caractérisé en ce que la pièce de fromage à pâte filée est une sphère, en ce que l'on introduit une extrémité effilée d'une piqueuse-doseuse au-delà du centre de la sphère et en ce qu'on la retire en-deçà de ce centre lors de l'injection.

L'invention a également pour objet un procédé, caractérisé en ce que, lors de l'injection, la température de la mozzarella est sensiblement égale à 63 °C.

L'invention a également pour objet un procédé, caractérisé en ce que le second aliment est un fromage frais, de préférence aromatisé.

L'invention a encore pour objet un procédé, caractérisé en ce que l'aliment composite comporte une enveloppe sphérique comportant sensiblement 60 g de mozzarella contenant sensiblement 40 g de formage frais.

L'invention a également pour objet un procédé de fabrication d'un aliment composite, caractérisé en ce qu'il comporte les étapes consistant à :
a) réaliser une pièce compacte sphérique en un premier aliment élastique ou malléable ;
b) réaliser un second aliment fluide, pâteux ou visqueux ;
c) introduire une extrémité effilée d'une piqueuse-doseuse au-delà du centre de la sphère et injecter le second aliment au coeur de la pièce du premier aliment, en retirant au cours de l'injection l'extrémité effilée de la piqueuse-doseuse au-deçà du centre de la sphère de manière à gonfler la sphère en choisissant la pression et le débit d'injection du deuxième aliment ainsi que les quantités relatives du premier et du second aliment, de manière à ce que le premier aliment forme une enveloppe sphérique enrobant le second aliment formant un fourrage.

L'invention sera mieux comprise au moyen de la description ci-après et des figures annexées données comme des exemples non limitatifs et sur lesquelles :
- la figure 1 comporte 5 vues schématiques illustrant la mise en oeuvre du procédé selon la présente invention ;
- la figure 2 est une vue schématique illustrant l'exemple préféré de réalisation du procédé selon la présente invention.

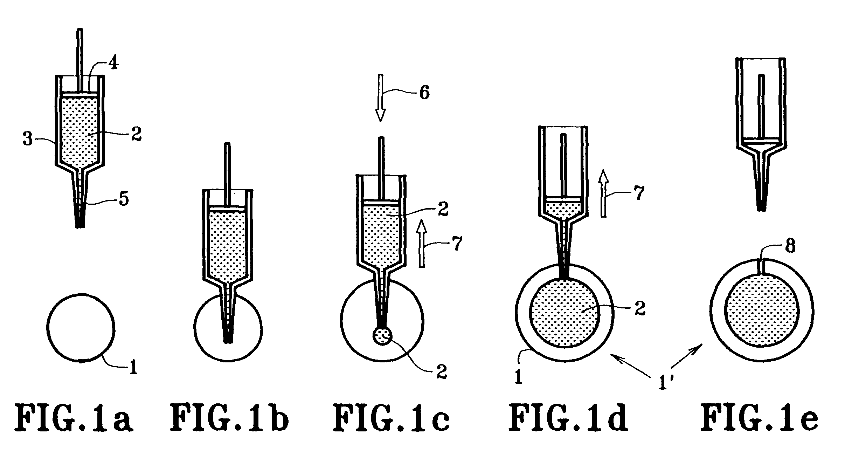

Sur les figures 1 à 2, on a utilisé les mêmes références pour désigner les mêmes éléments.

Sur la figure 1, on peut voir le principe du procédé selon la présente invention.

D'une part, on forme une pièce avantageusement sphérique en un premier produit alimentaire élastique et/ou malléable 1. D'autre part, on prépare un second produit alimentaire 2 fluide, visqueux ou pâteux que l'on charge dans une chambre d'injection d'une piqueuse-doseuse 3. La piqueuse-doseuse 3 comporte par exemple un piston 4 monté à translation dans la chambre d'injection de manière à en faire varier le volume pour engendrer un écoulement du second produit 2 par un canal ménagé dans une extrémité effilée, typiquement dans une aiguille 5.

Sur la figure 1b, on peut voir l'aiguille 5 pénétrer dans la pièce en premier produit alimentaire 1, avantageusement au-delà de son centre.

Sur la figure 1c, on peut voir le piston 4 descendre selon la flèche 6, ce qui provoque l'injection du second produit alimentaire 2 à l'intérieur de la pièce en premier produit alimentaire 1. Avantageusement, lors de l'injection, la piqueuse-doseuse 3 remonte selon la flèche 7 assurant le retrait de l'extrémité de l'aiguille 5 au-delà du centre de la pièce en premier produit alimentaire 1.

L'injection provoque l'augmentation du volume externe de la pièce en premier produit alimentaire 1 qui forme la paroi d'un aliment composite 1'. La vitesse de pénétration et de retrait de l'aiguille 5, son diamètre interne, son diamètre externe, le débit du second produit 2 et sa viscosité sont adaptés aux propriétés mécaniques et rhéologiques et, notamment, à l'élasticité du premier produit alimentaire 1 de manière à en assurer le gonflement sans éclatement. On a par exemple utilisé une aiguille ayant un diamètre externe de 4 mm et un diamètre interne de 2,5 mm. La diminution du diamètre interne de l'aiguille conduit à un fourrage plus compact.

Le retrait de l'aiguille 5 de l'aliment composite 1' selon l'invention est illustré sur les figures 1d et 1e. Pour certaines textures du premier produit alimentaire, il peut subsister, suite au retrait de l'aiguille 5, à la surface de l'aliment composite 1', une ouverture 8 de passage de l'aiguille 5. Cette ouverture peut subsister jusqu'à la commercialisation de l'aliment composite, notamment si son diamètre est faible et si le second produit alimentaire n'est pas trop fluide. Dans le cas contraire, on peut colmater l'ouverture 8 par déformation et/ou apport du premier produit alimentaire.

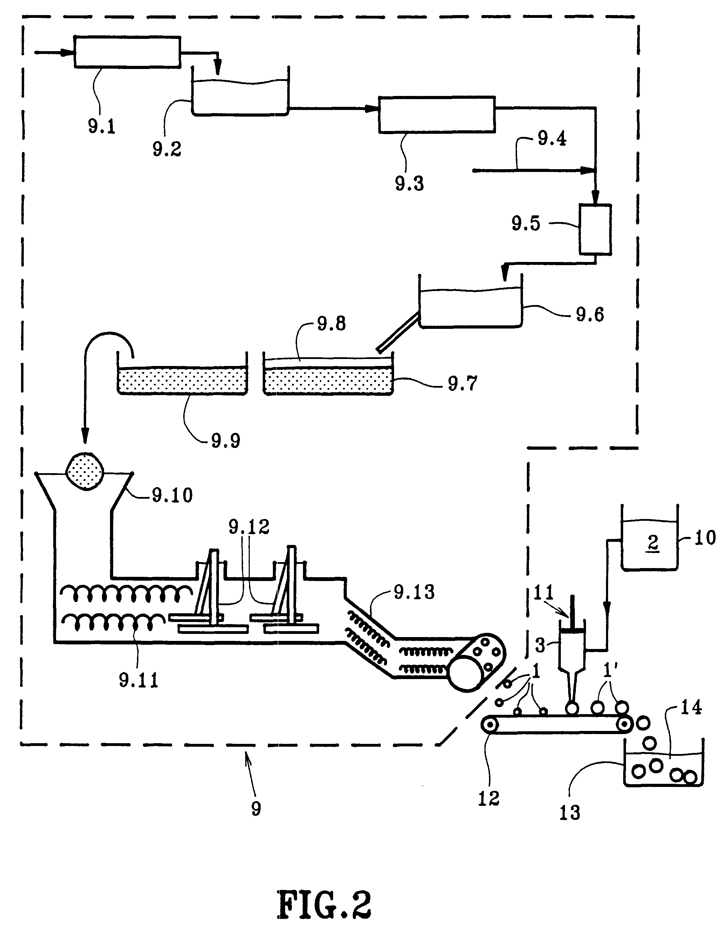

Sur la figure 2, on peut voir l'exemple préféré de réalisation d'un produit alimentaire composite 1' selon l'invention comportant une étape 9 de fabrication d'une boule de mozzarella (premier produit alimentaire 1), une étape 10 de fabrication du second produit alimentaire 2, par exemple du type fromage ou composition fromagère fluide, de préférence fromage frais et une étape 11 d'injection du second produit alimentaire 2 dans les boules de mozzarella. Dans l'exemple préféré de réalisation, on a obtenu un aliment composite sphérique en portions de 100 g comportant 40 g de fromage frais aromatisé formant le fourrage et 60 g de mozzarella contenant 58 % d'humidité, ES = 42 %, MG = 18,9 %, formant l'enveloppe, l'injection ayant commencé à 7 mm du bas de la sphère de mozzarella.

Les étapes 9 et 10 étant connues en soi ne sont décrites que brièvement.

En 9.1, on pasteurise le lait en le portant à 72°C pendant 15 s. Le lait pasteurisé est transvasé dans un réservoir 9.2 de stockage à froid à la température comprise entre 4 et 6°C. Le lait est de nouveau pasteurisé en 9.3 à une température comprise entre 74 et 76°C pendant 15 s, puis est refroidi à 21°C. En 9.4, on ajoute au lait de l'acide citrique, de manière à en standardiser l'acidité, puis on le réchauffe en 9.5 avant de le verser dans une cuve 9.6 avec rajout de la présure à 30 mℓ/100 ℓ, ce qui correspond à un temps de coagulation compris entre 7 et 10 mn. Entre la première pasteurisation en 9.1 et la coagulation, il s'est écoulé 45 à 55 mn. Le produit passe dans un bac 9.7 d'acidification sous sérum 9.8. En 9.9, on effectue l'égouttage. Le caillé est introduit dans une fileuse 9.10 où il est réchauffé par un bain d'eau portée à une température comprise entre 80 et 85°C. Des vis sans fin 9.11 poussent le caillé vers des malaxeurs 9.12. Le caillé baignant dans de l'eau chaude et dans des matières grasses est malaxé par une série de deux malaxeurs 9.12, puis passe dans une formeuse 9.13 conditionnant des boules déposées sur un convoyeur 12 avantageusement comportant des moyens d'immobilisation individuelle de chaque boule (non représentée). Le convoyeur 12 amène une à une les boules de mozzarella 1 sous la piqueuse-doseuse 3 qui en 11 assure l'injection du second produit alimentaire dans la mozzarella. Avantageusement, une pluralité de piqueuses-doseuses 3 synchronisées travaillent en parallèle chacune sur une file de boules 1 de mozzarella. Lors de l'injection, la mozzarella garde une température sensiblement égale à 63°C. L'aliment composite 1' tombe dans un bac de refroidissement 13 comportant avantageusement de l'eau froide avant d'être emballé et commercialisé.

Les propriétés rhéologiques de la mozzarella sont influencées principalement par l'âge du lait fabriqué, l'extrait sec du caillé avant filage, la température du filage, et la vitesse de refroidissement de la mozzarella.

Le second produit alimentaire est par exemple composé de 90 % de fromage frais contenant du lait pasteurisé, du sel, de l'ail, du poivre blanc, des fines herbes, de l'arôme de poivre et 10 % de ricotta (fromage de lactosérum). On peut également injecter d'autres fourrages, comme par exemple un mélange de ricotta, des épinards et de granapadano, du fromage frais nature ou aromatisé, des fromages fondus, des produits à base de légumes, de fruits, notamment des compotes, de poissons, de fruits de mer, de charcuterie ou de viande.

Le fourrage peut éventuellement être foisonné, par exemple à l'azote. En variante, on effectue une injection d'air comprimé formant une cavité dans la mozzarella antérieurement à l'injection du fourrage.

Il est bien entendu que la présente invention n'est pas limitée à la mise en oeuvre de mozzarella pour former l'enveloppe de l'aliment composite. On peut, sans sortir du cadre de la présente invention, utiliser tout produit alimentaire présentant la texture et les propriétés mécaniques, permettant l'injection sans éclatement et notamment les fromages à pâtes filées suivants :
- scamorza : ES = 45 % (extrait sec) ;
- cacciocavallo : ES = 54 % ;
- provolone : ES = 54 %

En variante, on peut recouvrir, avant injection, le premier produit alimentaire 1 par une fine pellicule élastique, dont l'ablation sera assurée après injection ou juste avant la consommation de l'aliment composite 1'.

Avantageusement, l'aliment composite a une forme sphérique. Toutefois, la mise en oeuvre d'autres formes ne sort pas du cadre de la présente invention. On peut par exemple assurer l'injection dans des pièces du premier produit alimentaire 1 cubique, parallélépipédique, ayant la forme d'un oeuf ou d'un ellipsoïde de révolution. De même, le produit alimentaire composite 1' peut, sans sortir du cadre de la présente invention, subir un formage ou un traitement thermique postérieur à l'injection.

La présente invention s'applique notamment à la fabrication d'aliments.

La présente invention s'applique principalement à la fabrication de fromages composites.

## Revendications

1. Procédé de fabrication d'un aliment composite, **caractérisé en ce qu'**il comporte les étapes consistant à :
a) réaliser une pièce compacte en un premier aliment, élastique ou malléable, constitué par un fromage à pâte filée (1) ;
b) réaliser un second aliment fluide, pâteux ou visqueux (2) ;
c) injecter le second aliment (2) au coeur de la pièce du premier aliment (1), de manière à le gonfler en choisissant la forme de la pièce du premier aliment (1), la pression et le débit d'injection du deuxième aliment (2) ainsi que les quantités relatives du premier (1) et du second aliment, de manière à ce que le premier aliment forme une enveloppe enrobant le second aliment formant un fourrage.

2. Procédé selon la revendication 1, **caractérisé en ce que** le fromage à pâte filée est de la mozzarella.

3. Procédé selon la revendication 1 ou la revendication 2, **caractérisé en ce que** la pièce de fromage à pâte filée (1) est une sphère, **en ce que** l'on introduit une extrémité effilée d'une piqueuse-doseuse au-delà du centre de la sphère et **en ce qu'**on la retire en deçà de ce centre lors de l'injection.

4. Procédé selon l'une quelconque des revendication 1 à 3, **caractérisé en ce que**, lors de l'injection, la température de la mozzarella est sensiblement égale à 63 °C.

5. Procédé selon l'une quelconque des revendications 1 à 4, **caractérisé en ce que** le second aliment (2) est un fromage frais, de préférence aromatisé.

6. Procédé selon l'une quelconque des revendications 1 à 5, **caractérisé en ce que** l'aliment composite comporte une enveloppe sphérique comportant sensiblement 60 g g de mozzarella contenant sensiblement 40 g de fromage frais.

7. Procédé de fabrication d'un aliment composite, **caractérisé en ce qu'**il comporte les étapes consistant à :
a) réaliser une pièce compacte sphérique en un premier aliment élastique ou malléable (1) ;
b) réaliser un second aliment fluide, pâteux ou visqueux (2) ;
c) introduire une extrémité effilée d'une piqueuse-doseuse au-delà du centre de la sphère et injecter le second aliment (2) au coeur de la pièce du premier aliment (1), en retirant au cours de l'injection l'extrémité effilée de la piqueuse-doseuse au-deçà du centre de la sphère de manière à gonfler la sphère en choisissant la pression et le débit d'injection du deuxième aliment (2) ainsi que les quantités relatives du premier (1) et du second aliment, de manière à ce que le premier aliment forme une enveloppe sphérique enrobant le second aliment formant un fourrage.

## Claims

1. Method for manufacturing a composite food, **characterised in that** it comprises stages consisting of:
a) making a compact piece of a first food, elastic or malleable, consisting of a plastic curd cheese (1);
b) making a second fluid, pasty or viscous food (2);
c) injecting the second food (2) into the heart of the piece of first food (1) in such a way as to expand it, the shape of the piece of first food (1), the pressure and the injection feedrate of the second food (2) together with the relative amounts of the first (1) and of the second food being chosen in such a way that the first food forms an envelope enclosing the second food forming a filling.

2. Method according to Claim 1, **characterized in that** the plastic curd cheese is mozzarella.

3. Method according to Claim 1 or Claim 2, **characterised in that** the piece of plastic curd cheese (1) is a sphere and **in that** a tapered end of a measuring syringe needle is introduced beyond the centre of the sphere and **in that** it is withdrawn on this side of the centre at the time of the injection.

4. Method according to any of the Claims 1 to 3, **characterised in that**, at the time of the injection, the temperature of the mozzarella is approximately equal to 63°C.

5. Method according to any of the Claims 1 to 4, **characterised in that** the second food (2) is a fromage frais, preferably flavoured.

6. Method according to any of the Claims 1 to 5, **characterised in that** the composite food comprises a spherical envelope comprising approximately 60 g of mozzarella containing approximately 40 g of fromage frais.

7. Method for manufacturing a composite food, **characterised in that** it comprises the stages consisting of:
a) making a compact spherical piece of a first elastic or malleable food (1);
b) making a second fluid, pasty or viscous food (2);
c) inserting a tapered end of a measuring syringe needle beyond the centre of the sphere and injecting the second food (1) into the heart of the piece of first food (1), by withdrawing the tapered end of the measuring syringe needle on this side of the centre of the sphere at the time of the injection in such a way as to expand the sphere, choosing the pressure and feedrate of injection of the second food (2) together with the relative quantities of the first (1) and of the second food in such a way that the first food forms a spherical envelope enclosing the second food forming a filling.

## Patentansprüche

1. Verfahren zur Herstellung eines Verbundnahrungsmittels, **dadurch gekennzeichnet, daß** es die folgenden Schritte aufweist, bestehend aus:
a) Herstellen eines kompakten Stückes eines elastischen oder streckbaren ersten Nahrungsmittels, bestehend aus einer faserigen Käsesorte (1);
b) Herstellen eines flüssigen, pastösen oder viskösen zweiten Nahrungsmittels (2);
c) Einspritzen des zweiten Nahrungsmittels (2) ins Innere des Stückes des ersten Nahrungsmittels (1), um es zu füllen, wobei der Einspritzdruck und -durchsatz des zweiten Nahrungsmittels (2) wie auch die relative Menge des ersten (1) und zweiten Nahrungsmittels so gewählt werden, daß das erste Nahrungsmittel eine Hülle bildet, welche das eine Füllung bildende zweite Nahrungsmittel umhüllt.

2. Verfahren nach Anspruch 1, **dadurch gekennzeichnet, daß** die faserige Käsesorte Mozzarella ist.

3. Verfahren nach Anspruch 1 oder Anspruch 2, **dadurch gekennzeichnet, daß** das Stück der faserigen Käsesorte (1) eine Kugel ist, daß ein konisch zulaufendes Ende einer Dosierspritzvorrichtung über die Mitte der Kugel hinaus eingeführt wird, und daß es während des Einspritzens über diese Mitte zurückgezogen wird.

4. Verfahren nach einem der Ansprüche 1 bis 3, **dadurch gekennzeichnet, daß** die Temperatur des Mozzarella beim Einspritzen im wesentlichen gleich 63°C ist.

5. Verfahren nach einem der Ansprüche 1 bis 4, **dadurch gekennzeichnet, daß** das zweite Nahrungsmittel (2) ein vorzugsweise aromatisierter Frischkäse ist.

6. Verfahren nach einem der Ansprüche 1 bis 5, **dadurch gekennzeichnet, daß** das Verbundnahrungsmittel eine kugelförmige Hülle mit im wesentlichen 60 g Mozzarella aufweist, die im wesentlichen 40 g Frischkäse enthält.

7. Verfahren zur Herstellung eines Verbundnahrungsmittels, **dadurch gekennzeichnet, daß** es die folgenden Schritte aufweist, bestehend aus:
a) Herstellen eines kompakten, kugelförmigen Stückes aus einem elastischen oder streckbaren ersten Nahrungsmittel (1);
b) Herstellen eines flüssigen, pastösen oder viskösen zweiten Nahrungsmittels (2);
c) Einführen eines konisch zulaufenden Endes einer Dosierspritzvorrichtung über die Mitte der Kugel hinaus und Einspritzen des zweiten Nahrungsmittels (2) ins Innere des Stückes des ersten Nahrungsmittels (1), wobei das konisch zulaufende Ende der Dosierspritzvorrichtung im Verlauf des Einspritzens über die Mitte der Kugel zurückgezogen wird, um die Kugel zu füllen, wobei der Einspritzdruck und -durchsatz des zweiten Nahrungsmittels (2) wie auch die relative Menge des ersten (1) und zweiten Nahrungsmittels so gewählt werden, daß das erste Nahrungsmittel eine kugelförmige Hülle bildet, welche das eine Füllung bildende zweite Nahrungsmittel umhüllt.
